# EUROPEAN PATENT APPLICATION

(11) **EP 0 653 869 A1**
(43) Date of publication of application: **17.05.1995**
(21) Application number: 94301278.1
(22) Date of filing: 23.02.1994
(51) Int. Cl.: H04M 9/00, H04M 3/42, H04M 9/02, H04M 3/50, H04Q 5/02, H04M 1/72, H04M 3/46, H04M 3/54, H04M 1/65

(54) **System and method to identify the terminating directory number at the customer premises**

(30) Priority: 05.03.1993 US 26919; 05.03.1993 US 26952
(71) Applicant: AT&T Corp., New York, NY 10013-2412 (US)
(72) Inventor: Ardon, Menachem Tsur, Naperville, Illinois 60540 (US)
(74) Representative: Johnston, Kenneth Graham

(57) **Abstract**

A telecommunication network having a switching system (1) connected to a called station by a line that provides notification to a called party of information relating to an incoming call. This information generally consists of the called number, but may also include an extension or other code. The called party identification is delivered to the called telephone station set during the silent period after ringing, or, advantageously, before ringing starts. A signal (e.g., FSK) is sent to the called telephone station set shortly before the ringing signal is sent to the called station. A converter (210) at the customer premises receives the FSK signal and demodulates it. A control unit connected to the converter then causes the called DN to be displayed, may cause a distinctive ring to be made, or take other action depending upon its program.

## Description

### Technical Field

This invention relates to the field of telephone communications, and, more specifically, to the area of providing terminating-party, called line identification (TCLID) to one or more called telephones in response to an incoming call.

### Background of the Invention

In current telecommunications switching systems, multiple directory numbers (DNs) can be assigned to one line. When a call comes into a terminating switching system, a database is searched at that terminating switch to determine the relationship between the incoming call's DN and the equipment number (EN) of the physical line connected to a telephone. The call is then assigned to that line. Conceptually, any number of DNs can be associated with one line. The usefulness of having multiple DNs associated with one line, however, is limited by the currently available facilities at the customer's premises to identify the called DN prior to answering the call, or, preferably, even prior to applying ringing the customer's equipment.

One example in the prior art of informing customers as to the called DN is distinctive ringing or coded ringing (sometimes called "teen ringing"). In this feature, when multiple DNs are associated with a single line, up to four distinctive ringing cadences can be associated with the different DNs. The customer can, prior to answering the phone, but after at least one ringing cycle, determine which DN was dialed by the cadence of the ring. Implementation of this feature, however, requires special high-level service circuits at the switching system to produce the different cadences or tones and the associated operational software, which are costly as compared to the number of lines using this service.

A further example of the problem of DN identification at the customer premises is in the area of party lines. A great deal of effort and expense goes into constructing line units and designing software to operate line units so that they can accommodate party lines. Some party lines use distinctive ringing, as described above, so that each party on the party line has a distinctive ring. Other line units have special circuitry to provide each telephone on the party line with a private ringing, or "selective ringing" as it is called in the art, by reversing tip-ring for one phone on the party line, etc., as is known in the art. Additionally, there are schemes that encode the ringing signal with various DC signals to provide private ringing for each party on a party line. Special telephones are required to decode this type of ringing signal. Encoded ringing may also be achieved by differentiating the frequency of the ringing signal. All of these schemes require special line unit circuitry and software.

Additionally, one or more directory numbers can be assigned to multiple telephones. Telephone keysets, which are an example of this, are an important segment of the telephone equipment market for small to mid-sized service-oriented businesses; a segment of the market that has growing, increasingly complex telecommunications needs. Keysets (telephones that terminate multiple lines and have a plurality of buttons or "keys" that connect the handset to each of the lines) permit small businesses to have multiple telephone lines and multiple directory numbers (DNs) at their premises without having to buy or lease expensive customer premises switching equipment. Since the terminology in the art is not clear, "buttons" (for the purposes of this patent application) refer to the dual-tone, multi-frequency keypad that is found on all touchtone telephones. "Keys" refer to the keys that cause a connection of a telephone to a line. Some keysets with a plurality of keys are, however, referred to as multibutton keysets to correspond to general usage.

Most small businesses are served by analog lines, and until recently, each keyset had a bundle of wires, including tip-ring pair for each of the line's power service connections, and an inter-office circuit. This bundle becomes quite thick as the number of lines increases. Businesses having more than one keyset are complicated to wire. Some manufacturers make keysets that requires fewer line connections to the switch, but these keysets require out-of-band signaling and a special line card at the switch to effect such signaling. These special line cards are expensive to the operating company and take up frame space that could be used for more lines.

One solution to this problem is provided by digital keysets connected to a digital switching system. Such digital keysets, such as integrated services, digital network (ISDN) sets, are connected to the switch by a two or four-wire line which provides two voice channels and a data channel. Using out-of-band signaling (messages on the data channel), a call is set up to one of the telephones, and more than one telephone may be alerted to the incoming call. In this manner, a business can have several ISDN telephones on premises with several directory numbers (DNs) associated with them and have all telephones alerted when a call comes in for one of the DNs.

Digital keyset systems, however, are not in widespread use at this time. Installing a digital keyset system requires that the operating company have a digital switch, with either a digital line unit or an integrated services line unit. Thus, the telephone operating companies have a significant capital outlay in order to provide this service to small customers. The telephone station sets are expensive and, for certain types of ISDN, the lines that connect the customer premises to the switching system must be, in some cases, upgraded to four wire connections.

Therefore, a problem in the art is that there is no inexpensive system or method to alert a customer of the terminating directory number for a telephone line associated with a plurality of directory numbers.

### Summary of the Invention

This problem is solved and a technical advance is achieved in the art in a telecommunication network having a switching system connected to a called station by a line that provides notification to a called party of information relating to an incoming call. This information generally consists of the called number, but may also include an extension number or other identification code. This invention comprises a system and method for delivering called party identification to the called telephone station set during the silent period after ringing, or, advantageously, before ringing starts. A signal representative of the called number (e.g., FSK) is sent to the called telephone station set shortly before the ringing signal is sent to the called station. A converter at the customer premises receives the FSK signal and demodulates it. A control unit connected to the converter then causes the called DN to be displayed, or a distinctive ring to be made, or other action taken depending upon its program. An illustrative embodiment may utilize the converter output to cause selective connections to different terminal units, such as a telephone, a modem or a facsimile machine.

This invention also provides an inexpensive keyset that connects to any switch supporting analog lines via tip-ring pairs, and does not require a special switch, line unit or line card. The keyset communicates with the switch via in-band signaling over the tip-ring pair to provide keyset functionality. When a call arrives at the switch for one of the directory numbers (DNs) associated with the keyset, the switch sends a frequency shift key (FSK) encoded message to all of the keysets associated with that DN before applying ringing. The FSK message includes at least the DN of the terminating telephone, and may also include an extension number or other code. The keysets receive the message, decode it, and then alert the user(s) of the incoming call so that it can be answered. Alerting may take the form of displaying the terminating DN, lighting a prespecified lamp on the telephone on or near a key, creating a special audible ringing or other suitable alerting.

In this manner, a keyset may be economically developed without the need for special wiring at the user's place of business or special line cards at the telephone switching system.

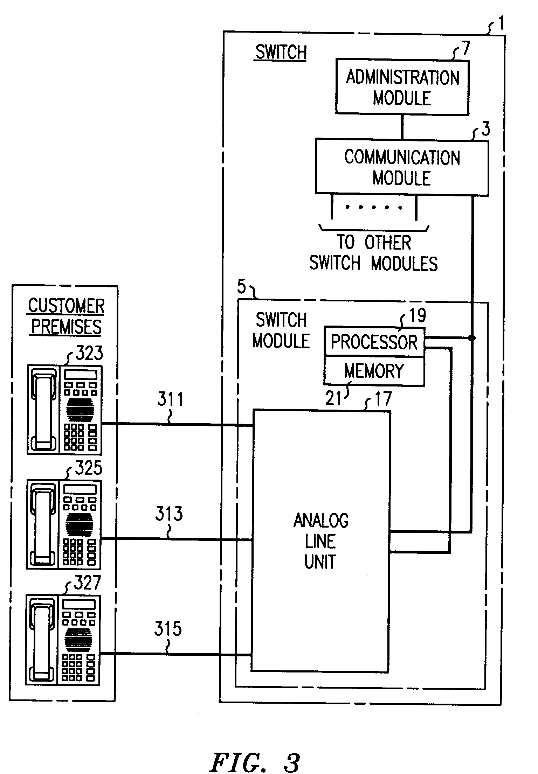

In a first exemplary embodiment (FIG. 3) a plurality of keysets according to the present invention are connected via tip-ring pairs to an ordinary line card of a telephone switching system. The telephone station sets are connected via lines which are associated with a plurality of directory numbers such that, in this exemplary embodiment there are assumed to be five DNs, hence, more directory numbers than there are telephone station sets. Each line is designated as a lead line for one or more directory numbers, a dependent line for a directory number, or designated to have no relation to a specific directory number. When the switch has received an incoming call for one of the plurality of directory numbers, it encodes the terminating called line identification (TCLID) using frequency shift key encoding, and delivers the TCLID to all telephone lines that are designated as lead or dependent. The switch also sets up the call to the telephone line designated as the lead. If the call is answered at the lead line telephone station set, the call is completed to that set and notification to the other sets ceases. To answer a call from another set, the user gives an offhook signal to the switching system, which gives dial tone in response. The user then causes the keyset to generate signaling in any of a variety of well known ways. In response, the switching system delivers the call to that keyset. Alerting the keysets is then stopped.

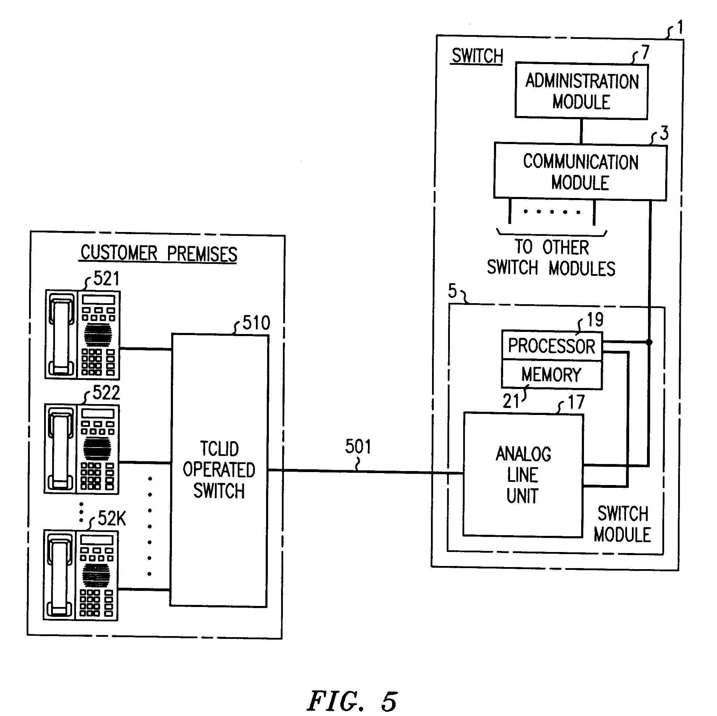

In a second exemplary embodiment (FIG. 5), a plurality of keysets are connected to a TCLID operated switch, which is connected to a switching system via a single line. There are a plurality of directory numbers associated with keysets. When the switching system delivers a call for one of the directory numbers, it first encodes the terminating DN using FSK and sends the FSK signal to the TCLID operated switch. The TCLID operated switch decodes the FSK signal and determines which one or more of the plurality of telephones to alert responsive to this DN. The TCLID operated switch then alerts the telephones and delivers the call to the first telephone that signals to the TCLID operated switch.

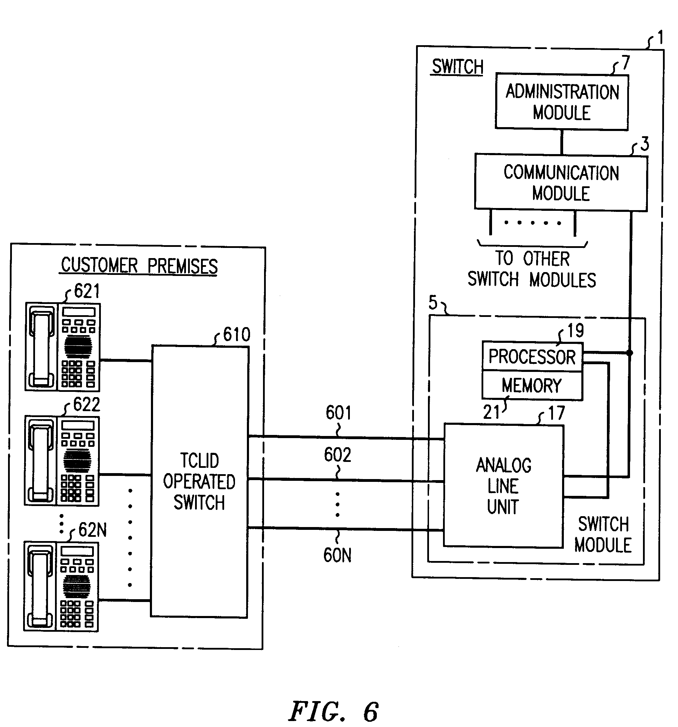

In a third exemplary embodiment (FIG. 6) a plurality of telephones are connected to a TCLID operated switch, as above, however the TCLID operated switch is connected to a switching system via a plurality of lines. In this embodiment, when a call is received for one of the plurality of DNs associated with the plurality of telephones, the switch hunts an available line among the plurality of lines and delivers the FSK encoded TCLID to the TCLID operated switch. The TCLID operated switch determined which one or more of the plurality of telephones to alert and alerts these phones. The TCLID operated switch connects the line of the incoming call to the first telephone that signals to answer the call.

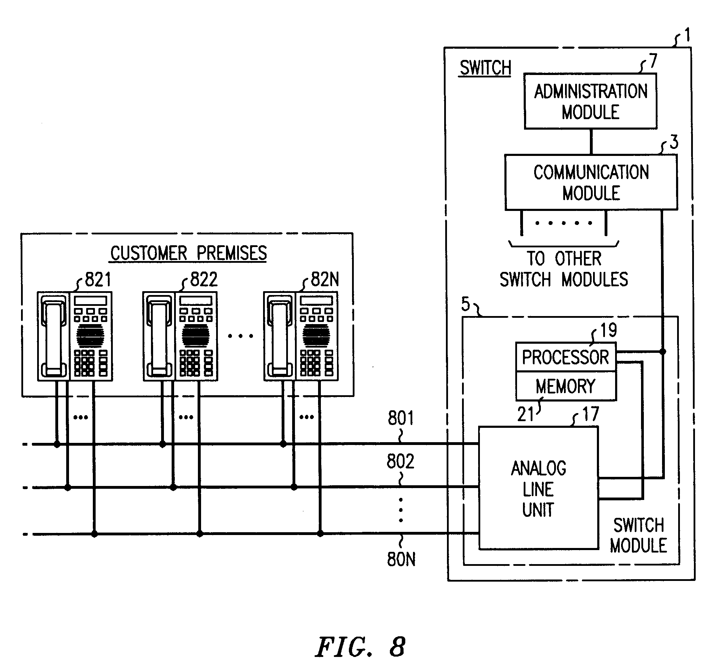

In a fourth exemplary embodiment (FIG. 8), a plurality of telephones associated with a plurality of directory numbers are connected to a switching system via a plurality of lines. Each said plurality of telephones is associated with the plurality of telephone numbers as either a lead, dependent or no association, as above. When a call comes in for one of the plurality of directory numbers at the switch, the switch hunts an available line and delivers the FSK encoded TCLID, as above. The keysets display the TCLID, or otherwise alert, in response to the TCLID. Any keyset can then connect to the line. Optionally, one of the lines connected to all of the keysets may be dedicated to signaling; in which case, all signaling communication between the keyset and the switch on this line is "out-of-band."

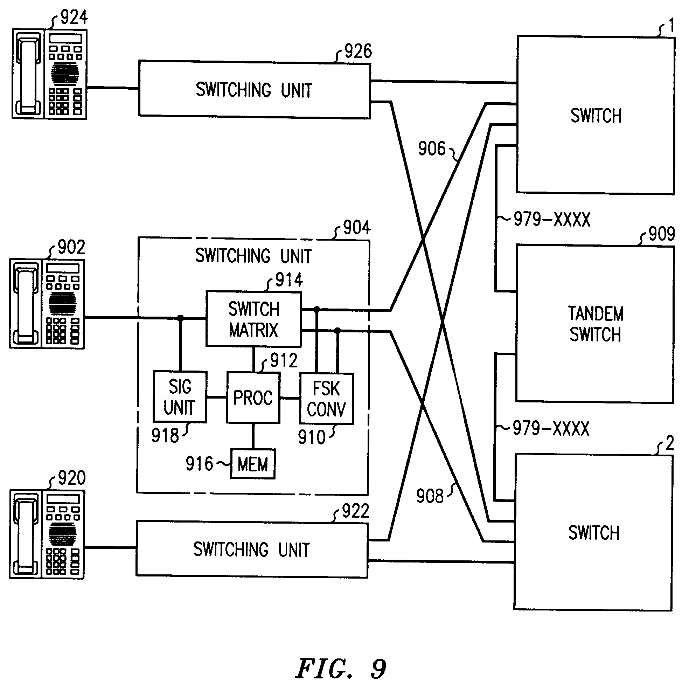

In a further exemplary embodiment (FIG. 9), a TCLID operated switching device is connected to a keyset and to two (or more) switching systems. A call for the directory number associated with the telephone station set is delivered via one of the switches and the switch delivers the TCLID to the TCLID switch. The TCLID switch converts the FSK into digits and alerts the keyset responsive thereto.

### Brief Description of the Drawing

A more complete understanding of the invention may be obtained from consideration of the following description in conjunction with the drawings in which;
FIG. 1 is a block diagram of a telephone switching system showing a line unit supporting individual lines and party lines according to an exemplary embodiment of this invention;
FIG. 2 is a functional block diagram of a converter device for use at a telephone or facsimile machine according to an exemplary embodiment of this invention;
FIG. 3 is a block diagram of a telephone switching system connected to a plurality of analog multibutton keysets according to an exemplary embodiment of this invention;
FIG. 4 is a functional block diagram of an analog multibutton keyset according to an exemplary embodiment of this invention;
FIG. 5 is a block diagram of a second exemplary embodiment of this invention comprising a TCLID operated switch connected to a switching system via one line;
FIG. 6 is a third exemplary embodiment of this invention comprising a TCLID operated switch connected to a switching system via a plurality of lines;
FIG. 7 is a block diagram of a TCLID operated switch as shown in FIG. 6;
FIG. 8 is a further exemplary embodiment of this invention comprising a plurality of keysets connected to a switching system via a plurality of lines; and
FIG. 9 is an exemplary embodiment of this invention wherein a TCLID operated switch is connected to multiple switching systems.

### Detailed Description

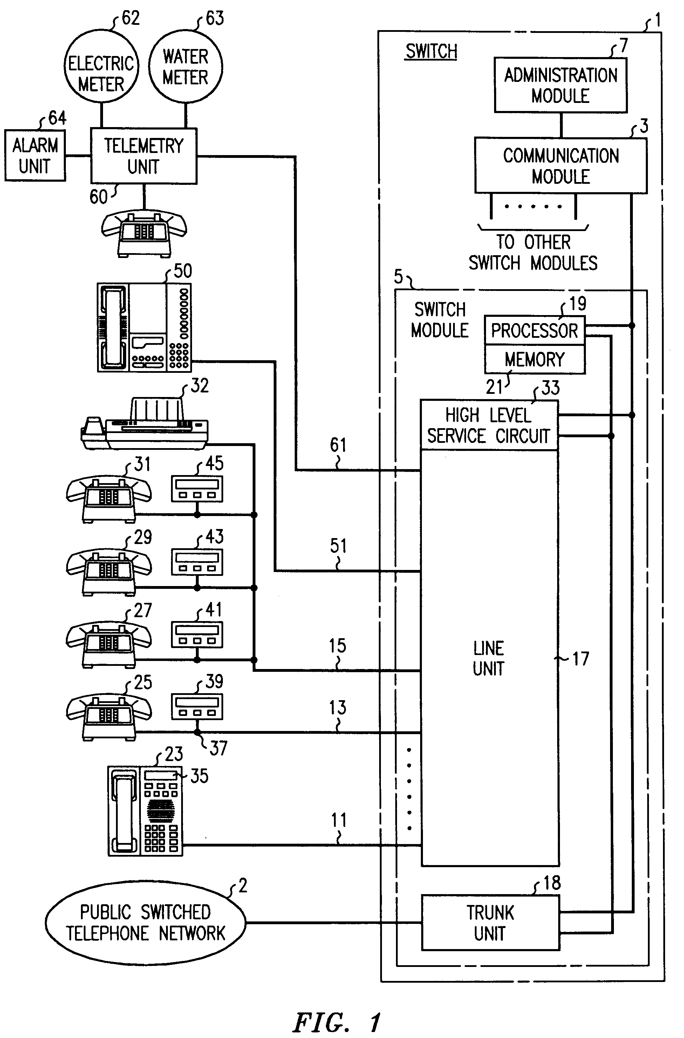

An exemplary embodiment of a system that identifies the terminating calling line identification (TCLID) at the customer premises when multiple directory numbers are assigned to one line is described here in context of a telephone switching system, as illustrated in FIG. 1, having a central office switch 1 which is connected to the public switched telephone network 2. Switch 1 is, illustratively, a distributed control, digital switch such as a 5ESS® switch manufactured by AT&T and described in the AT&T Technical Journal, Vol. 64, No. 6, July/August, 1985, pages 1303-1564. Alternatively, switch 1 may be an analog electronic switching system such as a 1ESS™ or 1AESS™ switch manufactured by AT&T, or a PBX, without departing from the scope of this invention.

The architecture of switch 1 includes communications module 3 as a hub, with switching module 5 and other switching modules (not shown for clarity) and administrative module 7 emanating therefrom. Switching module 5 terminates analog and/or digital subscriber lines, such as analog line 11, 13, and 15 through line units, such as analog line unit 17. Switching module 5 also terminates analog or digital trunks through trunk units, such as 18, which connects switch 1 to public switched telephone network 2. Administrative module 7 provides coordination of the functional components of switch 1 and provides a human/machine interface. Switching module 5 also includes processor 19 and memory 21. Processor 19 controls the functionality of switch module 5, and uses memory 21 to store the programs and data by which it operates.

Line unit 17 provides the interface between telephones such as telephones 23-31, facsimile machine 32, and telemetry unit 60, and the switching fabric (not shown) of SM 5 in switch 1, as is known in the art. Line unit 17 provides concentration, scanning, and other services, as is known in the art, and will, therefore, not be described further. Line unit 17 also provides a high level service circuit (HLSC) 33 for applying ringing (in this environment) and other services.

An exemplary embodiment of this invention is illustrated in the interaction between line unit 17 and telephone 23 connected by line 11. Telephone 23 has, for example, two DNs associated with it. Telephone 23 includes display 35 which can display alphanumeric characters, as known in the art. According to this invention, a call is set up to telephone 23 from switch module 5 through line unit 17. As part of the call set up, processor 19 receives the directory number (DN) for telephone 23. Processor 19 performs a database search in memory 21 to translate the directory number into a line identification or equipment number (EN), so that processor 19 may cause line unit 17 to connect line 11 to the incoming call. Processor 19 then determines that line 11 is not busy and causes HLSC 33 (or, alternatively, another service unit, such as a low current digital service unit within SM 5) to generate a frequency shift keyed (FSK) signal to encode the incoming DN into an analog signal that can be sent across line 11. Before processor 19 applies ringing to line 11, it causes the FSK signal to be sent to telephone 23 on line 11. Then processor 19 may optionally apply ringing through HLSC 33 in line unit 17.

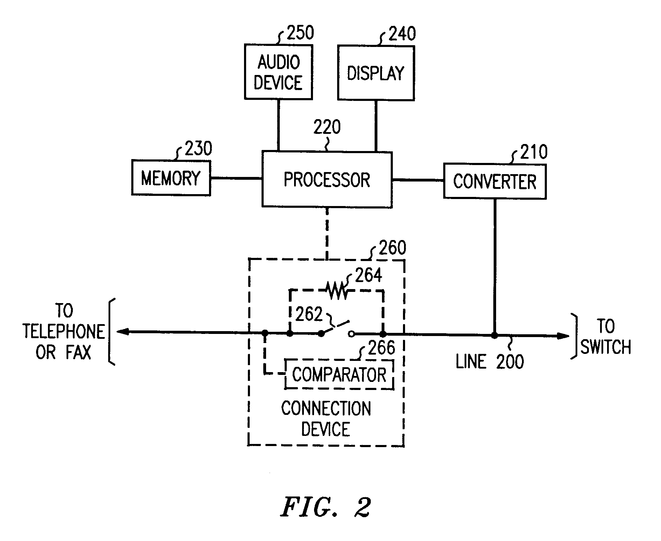

A converter at telephone 23, as will be described further in connection with FIG. 2, receives the FSK signal and demodulates it. A control unit in telephone 23 then causes the demodulated TCLID to be displayed on display 35. Further, the control unit in telephone 23 could cause an audible signal, such as a distinctive ring, to occur, depending on which directory number was being called, or take other action, depending on its program. Thus, the user or customer of telephone 23 can determine which DN is being called during or prior to the first ringing cycle, and answer the call accordingly.

An embodiment showing this invention in its most basic form may be seen in analog telephone 25 connected to line unit 17 by line 13. "Tee" connection 37 on line 13 provides an interface for converter box 39, which will be described further in connection with FIG. 2. Converter box 39 is known in the art as an incoming call line ID (ICLID) box and is commercially available. An ICLID box receives an FSK encoded message and displays it. The controller in display box 39 receives the FSK signal, causes the converter to convert the FSK signal into digits, and displays the digits on the display window. Ringing is then sent to telephone 25 by switch 1. The TCLID signal may be sent before ringing and the ICLID signal may then be sent during the silent periods between the ringing signal. The ICLID box may alternately display the two DNs or display them in different areas of the display. Thus, the called DN is displayed before ringing is applied.

Many new features may be implemented using the delivered TCLID without having to have expensive equipment in switch 1 or line unit 17. For example, a feature such as "teen ringing," wherein telephone 23 rings differently depending on the DN dialed, can be implemented. Instead of using HLSC special resources, as required in the prior art, telephone 23 includes a converter connected to line 11, a processor connected to the converter, and an audio device (all of which are described in FIG. 2) connected to the processor. The converter receives the DN and converts it to digits. The processor compares the digits to a list pre-stored in memory, and causes the audio device to signal differently, depending on the incoming DN. Optionally, the processor may also display the TCLID, as described above. Thus, the customer is audibly and/or visually alerted, as to which line is ringing without requiring costly central office equipment.

Additionally, an enhanced call waiting service may be implemented according to this invention. In this exemplary embodiment, telephone 23 or 25 has two (or more) DNs assigned to it. If, for example, a customer is talking on telephone 23, and a call waiting signal is heard, the customer needs to know which DN has a call waiting in order to make an informed choice whether to answer. In current telephone practice, the voice path is temporarily interrupted when the call waiting signal is given. The FSK signal can, therefore, be sent to the receiving party just after the voice path is interrupted, but prior to the call waiting audio signal. By this invention, the FSK signal is sent to telephone 23 and displayed on 35 just before the call waiting signal is sent. Since display 35 shows the TCLID, the customer has more information before choosing to answer the waiting call.

Another service that can be enhanced by using this invention is forwarding a call through hunt groups. The customers of telephone 23 and telephone 25 belong to a hunt group, for purposes of describing this service. When a call is connected to line 13 of telephone 25, an FSK signal (indicating the DN of telephone 23) is sent and decoded by display 39. In this manner, the customer of telephone 25 can determine to whom the call was originally directed, prior to the first ring and answer the telephone accordingly.

A further exemplary embodiment of this invention may be seen in line 15, which is connected to telephones 27, 29, and 31, and facsimile machine 32. This example of this invention applies equally to a home or business with multiple extensions, as illustrated, or to a party line. In this embodiment, there are four directory numbers assigned to line 15. There may be, for example, one DN associated with a home business, one DN as a family number, one DN for the facsimile machine, and a fourth for teenagers in the household. Each telephone has a display box 41, 43, and 45 associated with it which can receive and convert FSK signals and demodulate them, as described above. When a call is received for the family DN, for example, the call is set up as before and the FSK signal is sent over line 15. All display boxes 41, 43, and 45 demodulate the signal and display it. The person answering any of the phones 27-31 can then determine which DN is being called during the first ringing cycle.

Additionally, facsimile machine 32 has a separate DN associated with it, as stated above. Facsimile machine 32 includes a processor and converter, as described below in connection with FIG. 2. When a call comes in for the DN associated with facsimile machine 32, the FSK signal is generated and sent on line 15, as described above. Responsive to preprogramming, the converter at facsimile machine 32 receives the FSK signal, decodes the TCLID, and determines that the DN is for itself. Facsimile machine 32 immediately sends an off-hook signal responsive to the ringing signal. Therefore, facsimile machines such as facsimile machine 32 and other terminal units, such as auto-answer modems and other non-voice terminals share a line with telephones or other terminals.

Further new features can be implemented using various combinations of the telephones of FIG. 1. The telephones on line 15 may implement an intercom by dialing a special code and hanging up. Processor 19 recognizes the special code, sends an FSK signal on line 15 corresponding to the code, and applies ringing to line 15. The called party knows to pick up the call because of the displayed code, and the calling party can then pick up the phone as well. Battery feed for this arrangement is supplied by line unit 17, as known in the art, for revertive ringing of party lines.

Each telephone 27-31 may have one DN and special extension numbers associated with each telephone. If the calling party invokes a feature code (i.e., #7), recognized by the switch, dials the DN, and one of the extension numbers, only the telephone corresponding to the extension number may ring. In this manner, only the telephone in the teen's room rings for certain calls, but all the telephones 25-31 ring when no extension is included with the FSK signal.

Centrex-like features can be enhanced using this invention. For example, an enhanced analog-shared DN could be implemented by sending the FSK signal to a plurality of lines, such as lines 11, 13, and 15, prior to applying ringing. Each member of the group could then determine whether to pick up the call or not, by invoking a call pickup, call pickup with bargain or other feature as known in the art. Additionally, special telephones could be used that light one or more lines responsive to a particular DN.

This invention is also applicable to an answering machine, such as answering machine 50. Answering machine 50, in the preferred embodiment, comprises a digital answering system similar to an AT&T 1545. In the AT&T 1545, a plurality of different messages may be digitally recorded in electronic memory in up to four mail boxes. The mail boxes are selected by the calling party entering dual-tone, multifrequency digits responsive to a prompt message delivered by the answering system. According to an exemplary embodiment of this invention, an FSK signal carrying the terminating party identification (TCLID) is sent on line 51. Answering system 50 receives the TCLID and, if no one answers the telephone, causes a prompt message to be played. Advantageously, a prompt message is selected from a plurality of prompt messages (one per DN assigned to line 51) responsive to the TCLID. Messages are then stored (and retrieved) in a mail box corresponding to the TCLID, without any input required from the calling party.

A telephone-base telemetry system may also be implemented in a further embodiment of this invention. A telemetry unit 60 is installed on a telephone line 61 in a home. When a utility company wants to read an electric meter 62 or water meter 63 in the home, it dials, a special feature code, the DN of the home telephone, and appends a special number. Advantageously, the special number may be a code known only to the utility. Alternatively, a special trunk may be connected between the switch and the utility which provides greater security for the utility connection. A data base can then drive connection to line 61, which the switch connects to the utility's trunk. Switch 1 then sends an FSK signal encoded to include at least the special number. Telemetry unit 60, responsive to the special number, reads electric meter 62 or water meter 63 and sends the data to the utility.

A further telemetry unit facility connects to a home security system, such as alarm unit 64, connected to telemetry unit 60. Periodically, the alarm company can test the functionality of alarm unit 64 by sending a code, as above. Telemetry unit 60 queries alarm unit 64, and responds to the alarm company.

Telemetry unit 60, or any other TCLID device, may provide a loop-back function so that the local telephone company may test the line. The telephone company sends a special code, as before, and telemetry unit 60 responds by putting the system into loop-back mode. Another code may be sent on line 61 to restore service.

A service that can use this invention is incoming wide area telephone service, also known as "800", or "900" service. Several businesses may have individual "800" numbers, but all share a single line to an operator. When a call comes in to the operator, the terminating switch sends an FSK signal carrying the encoded terminating DN. A converter at the operator station converts the FSK signal into digits, which are displayed to the operator. The operator can then answer the call appropriately for each business. This feature can also be used with hunted multiple operator positions.

Turning now to FIG. 2, a functional block diagram of a converter device for use at telephone 23, converter 39, facsimile machine 32, answering machine 50, or telemetry unit 60 (FIG. 1) is shown. Line 200 is connected between switch 1, FIG. 1, and one or more of telephones 23-31 or facsimile machine 32, in FIG 1. Converter 210 is connected to line 200 and converts FSK signals into computer-understandable digits, as is known in the art. Processor 220 is connected to converter 210 and receives from converter 210 the converted digits. Processor 220 is under control of programs stored in memory 230. Processor 220, as one of its functions, can display digits from converter 210 on display 240. Processor 220 also controls audio device 250. Processor 220 can perform database look-ups in memory 230, which could contain a listing of all or selected DNs and assorted information, such as name, location, or other code. Processor 220 can also control audio device 250 by causing different signaling or ringing to occur for each different directory number programmed into memory 230.

Additionally, processor 220 may control a connection device 260 (shown in phantom), which can cause a connection to occur on line 200 when processor 220 detects a specific TCLID. Connection device 260 can be used, for example, to connect facsimile machine 32 (FIG. 1) to line 200 as soon as ringing is applied to line 200.

Connection device 260 may be manually operable in order to place outgoing calls. Relay 262, which is biased open, of connection device 260 is bridged by a high value resistor 264. A comparator 266, as known in the art, detects an offhook at the telephone or facsimile connected to device 260 because the voltage on line 200 will drop from approximately 48 volts to approximately 0. Relay 262 can then be closed to permit the outgoing call. Thus, the facsimile machine only answers calls for its own DN, but can call out at any time.

The device of FIG. 2 may be entirely within facsimile 32 or may be a separate box connected to the line between the facsimile and the switch. Alternatively, the device of FIG. 2 may be incorporated into a telephone, such as telephone 23, of FIG. 1, or maybe a separate box, such as converter box 39 of FIG. 1. The device of FIG. 2 may also be used to connect an answering machine or other voice mail system to the line.

Turning now to FIG. 3, an exemplary embodiment of a multibutton keyset according to an embodiment of this invention may be seen in the interaction between SM 5 and telephones 323, 325, and 327, which are connected via lines 311, 313, and 315 respectively. Telephones 323, 325, and 327 represent a plurality of telephones at a customer premises, for example, a real estate office or small law firm. For purposes of this example, the customer subscribes to five directory numbers (DNs) which all terminate to telephones 323, 325, and 327 at the customer's premises via telephone lines 311, 313, and 315. Each telephone line has one or more lead DNs and may have dependent DNs. A lead telephone line is one that an incoming call is set up to every time the DN is called. A dependent telephone line is one that is alerted or signaled when the DN is called, and may pick up a call to the DN if desired. Lines 311, 313, and 315 are associated with the five directory numbers in accordance with Table 1.

| | DN1 | DN2 | DN3 | DN4 | DN5 |
|---|---|---|---|---|---|
| Line 311 | L | L | D | D | * |
| Line 313 | D | * | L | L | * |
| Line 315 | D | * | * | * | L |

| TABLE 1 | | | | | |
|---|---|---|---|---|---|
| | | | | | |

According to Table 1, Line 311 is the lead line for directory numbers 1 and 2, and a dependent line for directory numbers 3 and 4. Line 313 is not associated with directory number 5 at all. Likewise, line 313 is the lead line for directory numbers 3 and 4, dependent line for directory number 1 and is not associated with directory numbers 2 and 5. Finally, line 315 is lead line for directory number 5, a dependent line for directory number 1 and is not associated with directory numbers 2, 3, and 4.

As a call arrives at switch 1 for one of the directory numbers associated with the customer premises, for example, directory number 1, the telephone call is delivered to SM 5. Processor 19 performs a database search in memory 21 to determine what line or lines are associated with the directory number. In this case, processor 19 determines that line 311 is the lead telephone line and telephone lines 313 and 315 are dependent telephone lines for this directory number. Responsive to determining that telephone 311 is the lead line, processor 19 causes line unit 17 to set up the call to line 311, as is known in the art.

As a next step, processor 19 causes line unit 17 to generate a frequency shift key (FSK) signal encoding the termination called line identification (TCLID) into signal, which is then sent across lines 311, 313, and 315. Optionally, ringing can then be applied to one or more of the lines, as is known in the art. Other data may also be sent on the lines, such as extension numbers, special codes, and the like, which may have the same effect as the TCLID.

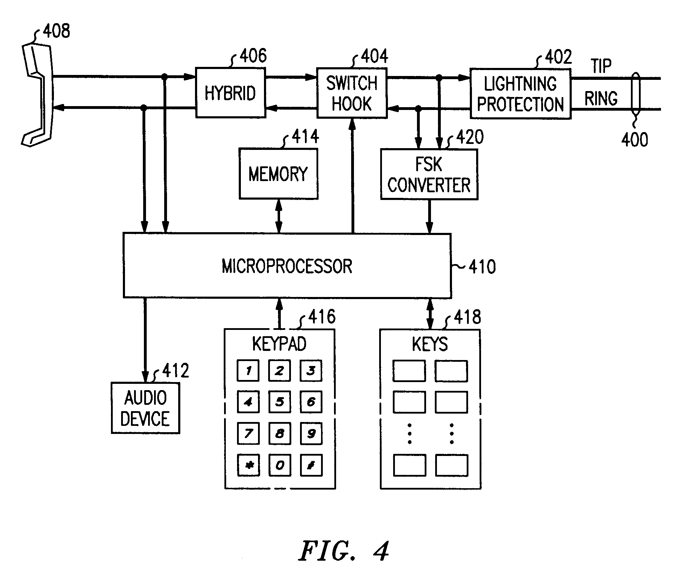

At the customer premises, telephones 323, 325, and 327 all receive the TCLID approximately simultaneously. A converter in the telephones, as will be described further in connection with FIG. 4, receives the FSK signal and demodulates it. A control unit in telephones 323, 325, and 327 then causes the demodulated TCLID to be indicated at the telephone. This indication may be via a display or could light a lamp on or next to a key on the telephone, as is known in the art. The telephones 323, 325, and 327 may then ring or otherwise audibly alert the users either responsive to receipt of the FSK signal or, optionally, in response to ringing being applied to lines 311, 313, and 315. If the user of telephone 323 picks up the handset, the call is connected, as is known in the art, and switch 1 ceases alerting of telephones 323, 325 and 327.

If the user of telephones 325 or 327 picks up (for example, when telephone 323 is busy) then other steps are taken. The user of telephone 325 lifts the handset, which causes the telephone 325 to give an offhook to line unit 17. Line unit 17 then provides dial tone to telephone 325. This is important because the user of telephone 325 may wish to dial out at this time instead of answering telephone 323. SM 5 expects to receive signaling from telephone 325 at this point. Telephone 325 signals to line unit 17 that the user wants to answer the line for telephone 323. Signaling from telephone 325 to line unit 17 could be, for example, dual-tone, multifrequency (DTMF) signaling, as is common from a touchtone phone. This signaling could be in the form of a special number sequence from the keypad buttons, for example, *7, as the sequence for call pickup. Alternatively, call pickup signaling sequences can be preprogrammed into the keys of telephone 325, and signaling the switch system is accomplished by pressing a key on the keyset 325. For example, a key with the phone number of DN 1 causes DTMF or other signaling to be sent to SM 5. Alternatively, an encoded signal identifying the key is sent to SM 5 which may then perform a lookup to determine which DN is being picked up.

This system also provides multiple call appearances for each line. If, in the previous example, telephone 323 is busy on DN 1, and another call comes in for DN 1, line unit 17 can provide an FSK encoded TCLID signal to telephone 323 and a call waiting tone to alert telephone 323 that there is another call for DN 1. Line unit 17 also sends the TCLID to telephones 325 and 327 that a call is waiting for DN 1. The users of telephones 325 and 327 then decide whether to answer the call, as described above. Alternatively, SM 5 may present the second call to telephones 325 and 327 via the FSK signal and not to telephone 323. Additionally, a hunt group feature may be used to deliver the call as an alternate lead line, for example, line 325, and line 327 is then a dependent line.

According to Table 1, a call for DN 2 will only be presented to telephone line 311 and no TCLID is sent to either telephone line 313 or 315. This provides a private line to telephone 323 that will not terminate to any other phone in the office. Likewise, DN 5 will only cause an alerting signal to be given at telephone 327 and no other telephone in the office will be alerted. DNs 3 and 4 have a lead telephone line of 313 and dependent telephone line 311, and no FSK signal or alerting is sent to telephone 327.

Turning now to FIG. 4, functional block diagram of an analog multibutton keyset, such as keysets 323, 325, and 327, (FIG. 3) is shown. One analog-two-wire (tip-ring) pair 400, as is known in the art, connects the telephone to line unit 17. Tip-ring pair 400 delivers signals through lightening protection device 402 to switch hook 404. Switch hook 404 provides onhook and offhook indications to line unit 17. Signals are delivered from switch hook 404 to a two-wire to four-wire converter circuit or hybrid 406. Hybrid 406 converts tip-ring (a full duplex connection to the telephone network) to a receive audio path and a transmit audio path. Receive audio path and transmit audio path are connected to the speaker and microphone, respectively, of handset 408 as is known in the art.

Switch hook 404 provides onhook and offhook indications to the network under control of microprocessor 410. Microprocessor 410 also controls audio device 412 to provide an audible alerting signal when an incoming call is received. Microprocessor 410 is connected to memory 414, which stores programs and data used by microprocessor 410, as is known in the art. Microprocessor 410 receives input from keypad buttons 416 and provides DTMF signaling to the network responsive thereto, as is known in the art. Microprocessor 410 also communicates with keys 418. Microprocessor 410 may, in one embodiment of this invention, illuminate lamps next to certain keys responsive to incoming DN numbers. Also, microprocessor 410 may generate DTMF signals responsive to the user pressing one of the keys 418.

FSK converter 420 is connected to tip-ring pair 400 before switch hook 404, so that it may receive FSK signals while switch hook 404 is in the onhook position. FSK converter 420 receives FSK signals and translates the signals into computer-usable form. FSK converter 420 then delivers the digits to microprocessor 410.

To continue the example from FIG. 3, the telephone of FIG. 4 is telephone 325. Telephone line 400 is equivalent to line 313. When a call comes in for DN 1 (Table 1) line 400 is a dependent line and line 311 (telephone 323) is lead. An FSK signal is sent via tip-ring pair 400 and received by FSK converter 420 at telephone 325. FSK converter 420 receives the FSK signal, translates it into digits, and sends the digits to microprocessor 410. Microprocessor 410 takes the digits converted from FSK signals, and determines the proper response by consulting programs in memory 414. Since the DN delivered through the FSK signals is not for this telephone, microprocessor 410 causes a key in keyset 418 to be illuminated, corresponding to DN 1. Microprocessor 410 may also cause audio device 412 to provide an alerting sound.

If the user of telephone set of FIG. 4 decides to answer the call, the user removes handset 408 from the switch hook, which causes processor 410 to provide an offhook signal to line unit 17 (FIG. 3). Line unit 17 provides a dial tone on tip-ring pair 400 through the telephone system which is audible at handset 408. The user then presses the key on keypad 418 with the light signal, which causes microprocessor 410 to send DTMF signaling to line unit 17 (FIG. 3). Line unit 17 then delivers the call to telephone 325.

Turning now to FIG. 5, an alternative exemplary embodiment of an analog multibutton keyset is shown. In this embodiment, switch 1 is connected by a single line 501 to a TCLID operated switch 510. TCLID operated switch 510 provides a Kx1 concentration of lines. That is, there can be up to K DNs associated with the customer premises. TCLID operated switch 510 is connected to a plurality of telephones on the customer premises, telephones 521-52K. Each of the telephones 521-52K may be associated with a different DN, DN1-DNK. However, this invention is not limited to each telephone being associated with a separate DN and multiple telephones may be associated with the same DN (and vice-versa) without departing from the scope of this invention.

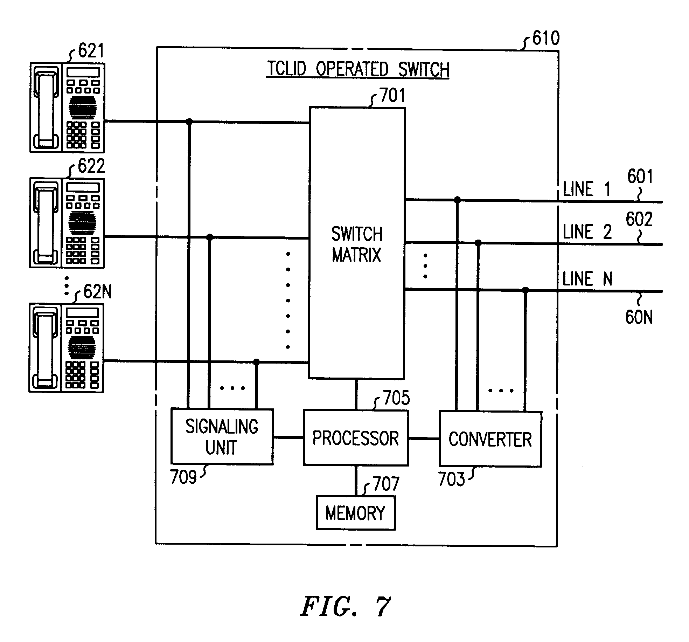

As will be explained further below in connection with FIG. 7, when a telephone call arrives at switch 1 for one of DNs 1-K, switch 1 first checks to see if line 501 is busy. If line 501 is not busy, switch 1 generates an FSK signal, encoding the terminating calling line identification (TCLID). The FSK signal is sent across line 501 to TCLID operated switch 510. TCLID operated switch 510 converts the FSK signal into computer-readable form and, in response, connects the telephone associated with the directory number to line 501.

Interoffice communication is facilitated by this invention, in that TCLID operated switch 510 can, responsive to preprogrammed code signals from a telephone, connect one telephone to another telephone, for example, telephone 521 to telephone 522, without effecting a connection to switch 1. This will be described further, below, in connection with FIG. 5. Thus, for customers requiring more than one DN, but having facilities and/or needs for only one line, an interoffice communication system and Centrex-like features may be implemented by a small customer premise TCLID operated switch. Telephones 521, 522-52K may be analog multibutton keysets such as the keyset described in FIG. 4. TCLID operated switch may pass the FSK signal to any combination of telephones 521, 522-52K. Alternatively, telephones 521, 522-52K may be ordinary touchtone telephones, as is known in the art.

A further exemplary embodiment may be seen in FIG. 6 wherein switch 1 is connected via lines 601, 602-60N via a TCLID operated switch 610. TCLID operated switch 610 is connected to a plurality of analog multibutton telephones 621, 622-62N on the customer premises. In this exemplary embodiment, telephones 621,622-62N are associated with individual telephone numbers DN1, DN2-DNK respectively. There may be greater, fewer, or the same number of telephones as there are lines.

In the preferred embodiment of this invention, as a call comes in for a DN, for example DN2, line unit 17 in switch 1 hunts for a non-busy line in the group 601-60N, as is known in the art. (Alternatively, line unit could always route a specific DN on a specific line.) When line unit 17 has determined which line to deliver the call on, it encodes the terminating called line identification in an FSK signal, as described above, and sends the signal to the TCLID operated switch 610. TCLID operated switch 610 receives the FSK encoded TCLID, decodes it and attempts to deliver the call to the telephone associated with the TCLID, in this example telephone 622. In this embodiment, if telephone 622 is busy, TCLID operated switch 610 may deliver the call to another telephone, depending on a dependency scheme (as in TABLE 1 above) or may alert all telephones within an area or group that there is a call for one of the telephones by passing on the FSK signal, or generating other signaling. Thus, a small customer premises can enjoy all of the features of a large PBX system or Centrex system while having only minimal additional equipment on the customer premises.

Turning now to FIG. 7, a TCLID operated switch such as 610 in FIG. 6 is shown. Lines 601-60N entering TCLID operated switch 610 arrive at switch matrix 701. TCLID operated switch 610 differs from TCLID operated switch 510 in that switch 510 (in FIG. 5) only has one line coming in at switch matrix 701, otherwise operation is basically the same, and thus, only TCLID operated switch 610 will be described. An FSK converter circuit 703 is connected via a "Tee" connection to each of lines 601-60N. Converter circuit 703 detects an FSK signal on each of the lines when it is sent from switch 1 (FIG. 3) and passes the line number and the TCLID to a processor 705.

Processor 705 determines, via programs and data stored in memory 707, which telephone line 621-62N receives the call. Processor 705 determines whether the destination telephone is already busy and, if so, takes appropriate action. Otherwise, processor 705 causes switch matrix 701 to connect the line with the incoming call to the destination telephone. Processor 705 may, advantageously, forward the FSK signal or other signal to a display in the telephone or, alternatively, to all displays in all telephones to indicate an incoming call.

Processor 705 is also connected to signaling unit 709, which is operationally connected to all telephone lines between the telephones and switch matrix 701. Signaling unit 709 receives notice of offhook for the telephones so that processor 709 may connect an outgoing telephone call through switch matrix 701. Signal detection unit 709 may also receive DTMF signals from telephones 621-62N, as is known in the art, for implementing features such as intercoms, etc., in which processor 705 causes switch matrix 701 to connect one telephone to another without connecting it to one of the lines to the switch.

FIG. 8 shows a further exemplary embodiment according to another aspect of this invention. Multiple incoming lines 801, 802-80N connected to line unit 17 of switch 1 may all be connected to each telephone in customer premise 821, 822-82N. A small switching unit, such as the TCLID operated switch of FIG. 7 may be incorporated within each telephone or alternatively may be included near each telephone to provide termination of multiple lines for each telephone. An incoming call for one of the directory numbers associated with the telephones, for example DN1, could come in on one of the lines, for example 802. An FSK encoded TCLID is received from line unit 17 on each of the telephone stations on line 802. A converter circuit in each of the telephones, as described in FIG. 7, determines that the call is for DN1. DN1 may be, for example, associated with telephone 721. If telephone 721 is not busy, the switching unit causes telephone 721 to be alerted, as described above. One or more of the other telephones in the office may also be alerted according to a dependency scheme as described above. To answer a call, a key is pressed, which causes the telephone to be connected to the line on which the signal was received.

An alternative embodiment may be seen in the context of FIG. 8, wherein line 80N is designated as a dedicated signaling line. In this embodiment, telephones 821, 822-82N may signal to SM 5 without interrupting anything on a line in use. For example, if telephone 821 were connected to line 801 and the user wants to add a third party on a normal analog line, the user flashes the switch hook. In this embodiment of this invention, the user presses a key which causes signaling to be sent on line 80N. The signaling may be DTMF digits, may be special codes, or even digital packets.

Turning now to FIG. 9, an ultra-reliable system using an analog multibutton telephone keyset according to this invention is shown. Telephone 902 is connected to a control unit 904 according to this invention. Telephone 902 could also incorporate control unit 904 without departing from the scope of this invention. Control unit 904 is connected via line 906 to switch 1, and line 908 to switch 2. Both switch 1 and switch 2 are connected to tandem switch 909 via trunks, as is known in the art. In this exemplary embodiment of this invention, tandem switch delivers calls for a specific office code, for example 979, to both switches 1 and 2. Tandem switch may deliver these calls by alternating between offices or by an algorithm for load distribution. Switch 1 delivers calls for the DN associated with telephone 902 on line 906, and switch 2 delivers calls for the DN associated with telephone 902 via line 908, as is known in the art. When a call comes in for telephone 902 from, for example, switch 1, an FSK encoded TCLID sent on line 906. FSK converter 910 receives the FSK signal, translates it and delivers it to processor 912. Processor 912 determines how to connect switch matrix 914 by consulting programs and data stored in memory 916. Processor 912 configures switch matrix 914 to connect line 906 to telephone 902 and causes signaling unit 918 to cause an alerting signal to be given at telephone 902.

To place an outgoing call from telephone 902, the user signals by lifting the switchhook or other means which is detected at signaling unit 918 and reported to processor 912. Processor 912 configures switch matrix 914 to connect telephone 902 to one of lines 906 or 908. Telephone 902 can be connected to lines 906 and 908 by alternating between the two or by a determination as to how quickly dial tone is received from the line. In this manner, if one of switch 1 or switch 2 were blocked, the user of telephone 902 may still be fully operational (i.e., it may place outgoing calls and may still receive incoming calls).

An entire Centrex-like system may use this ultra-reliable service as seen in FIG. 9. Telephone 920 with converter 922 is connected to both switches 1 and 2, as is telephone 924 through converter 926. As in the embodiment of FIG. 3, when a call comes in for a telephone with a DN associated with telephone 902, switch 1 or switch 2 sends FSK signals to converters 922 and 926, as well as 904. In this embodiment, if, for example, the user of telephone 924 wishes to intercept or receive a call for telephone 902, the user would pick up the handset and the processor in unit 926, having detected the FSK signal, would cause the switch matrix to connect telephone 924 to the same switch that sent the FSK signal. The user of telephone 924 could then signal the switch to deliver the call through that telephone, as described above, in connection with FIG. 3.

It is to be understood that the above-described embodiments are merely illustrative principles of the invention, and that many variations may be devised by those skilled in the art without departing from the scope of this invention. It is, therefore, intended that such variations be included within the scope of the appended claims.

## Claims

1. In a telecommunications network having a switching system connected to a called station by one line, a method for identifying the terminating directory number at the customer premises of said station when multiple directory numbers are assigned to said one line comprising the steps of:
receiving, in said switching system, signals from a calling station identifying one of the directory number of said called station;
responsive to receipt of said signals, transmitting data relating to said called directory number to said called station; and
indicating at said called station which of said numbers was called.

2. The method of claim 1, wherein said data comprises a directory number on an extension number of the called party.

3. The method of claim 1, wherein said line is analog, further including the step of generating a frequency shift key encoding of said terminating directory number, and said step of transmitting data comprises transmitting said frequency shift key encoded terminating directory number.

4. The method of claim 1, wherein said called station includes a display, or an audible signalling device, said method further comprising the step of either displaying the terminating directory number on said display at said customer premises, or the step of audibly signalling differently for each of said called stations responsive to said terminating directory number.

5. The method of claim 1, wherein said transmitting comprises either transmitting to an incoming line identification device connected to said called station, or transmitting said terminating directory number and an incoming calling line identification.

6. The method of claim 1 wherein said transmitting occurs during a telephone call, said step of transmitting comprising the substeps of:
disconnecting an audio path;
sending a frequency shift key encoded terminating directory number to said called station; and
sending a call waiting alert to said called station.

7. A telephone station set connectable to a switching system, said switching system connected to a telecommunication network, said telephone station set having more than one directory number associated with it at said switching system, said switching system sending signals representative of the terminating called line identification (TCLID) to said telephone station set responsive to receipt of an incoming call, said telephone station set comprising:
converter means connected to said switching system responsive to said signals from said switching system for converting said TCLID into digits; and
display means responsive to said converter means for displaying said digits; whereby a user of said telephone may determine which of said plurality of directory numbers is being called.

8. A connection device for connecting a terminal unit to a switching system, said terminal unit connected through said connection device to said switching system by a line, said terminal unit having a directory number, said switching system sending signals representative of a terminating called line identification (TCLID) to said line responsive to an incoming call, said connection device comprising:
converter means connected to said line responsive to said signals for converting said TCLID into digits;
processor means connected to said converter means for comparing said digits with said directory number of said terminal unit; and
connection means responsive to said processor determining that said digits correspond to said directory number for connecting said terminal unit to said incoming call.

9. In a telephone network, a method for alerting one of a plurality of telephones on a party line, wherein each of said plurality of telephones has a unique directory number, said method comprising the steps of:
receiving, in said switching system, signals from a calling station identifying the directory number of one of said plurality of telephones; and
responsive to receipt of said signals, transmitting data relating to said called party for display at each of said plurality of telephones.

10. The method of claim 9, wherein said data comprises the unique directory number of the called party.

11. The method of claim 9, wherein said line in analog, further including the step of generating a frequency shift key encoding of said unique directory number, and said step of transmitting data comprises transmitting said frequency shift key encoded directory number.

12. The method of claim 9, wherein each of said plurality of telephones either includes a display, said method further comprising the step of displaying the unique directory number on said display;
or includes an audible signalling device, said method further comprising the step of audibly signalling differently for each of said called one of said plurality of telephones responsive to said unique directly number;
or includes an audible signalling device, said method further comprising the step of audibly signalling only the called one of said plurality of telephones responsive to said unique directory number.

13. An analog multibutton keyset for use at a customer premises, said customer premises having a plurality of keysets and a plurality of directory numbers (DNs) assigned to said keysets, said keyset being connectable to a switching system, each of said keysets comprising:
means for connecting said keyset to said switching system by an individual analog line;
means responsive to a signal, received from said switching system on said one line and being representative of one of said DNs, for indicating which one of said plurality of DNs is being called; and
means for signalling to said switching system to deliver said call to said keyset via said line.

14. The keyset of claim 13, wherein said indicating means includes means for converting said signal into digits and means responsive to said digits for informing a user of said DN of the call.

15. The keyset of claim 14, wherein said means for converting said signals into digits comprises a frequency shift key demodulator.

16. The keyset of claim 14, wherein said informing means either comprises a visual display;
or comprises an audio alerting system to provide distinctive ringing for each DN.

17. The keyset of claim 13, wherein said signalling means either comprises a plurality of keys, wherein each of said keys causes signalling to be generated;
or comprises a plurality of buttons on said keyset, wherein each of said buttons causes DTMF signals to be generated in response to being pressed.

18. In a telephone network comprising a telephone switching system connected by one line to each of a plurality of analog multibutton keysets, said plurality of keysets being associated with a plurality of DNs, a method comprising the steps of:
said switching system sending a signal representative of the terminating DN of a call to one or more of said plurality of keysets;
said one or more of said plurality of keysets indicating an incoming call for said terminating DN of said call; and
said switching system delivering said call to a first keyset to signal to said switching system.

19. The method of claim 18, further including the step of setting up said call to a lead one of said plurality of keysets.

20. The method of claim 5, wherein said step of sending a signal includes encoding the terminating DN of a call in a frequency shift key signal.

21. The method of claim 20, further including the step of said one or more of said plurality of keysets decoding said frequency shift key encoded DN.

22. The method of claim 18, wherein said step of said one or more keysets indicating an incoming call comprises said one or more keysets either displaying said terminating DN;
or audibly alerting by a ringing signal that is different for each DN.

23. The method of claim 18, wherein signalling said switch comprises sending dual tone multifrequency signalling to said switch responsive to a button on said keyset.

24. The method of claim 18, further including the step of setting up said terminating call to a lead one of said plurality of keysets; and
the step of sending a signal comprises sending said signal to said lead keyset and to one or more dependent ones of said plurality of keysets.

25. The method of claim 24, wherein said step of terminating said incoming call comprises terminating said call to said lead keyset if said lead keyset sends an off hook signal, and terminating said call to one of said dependent keysets if said one of said dependent keysets sends a call pick up signal.
